# EUROPÄISCHE PATENTSCHRIFT

(11) **EP 0 658 031 B1**
(45) Veröffentlichungstag und Bekanntmachung des Hinweises auf die Patenterteilung: **23.05.2001**
(21) Anmeldenummer: 94118959.9
(22) Anmeldetag: 01.12.1994
(51) Int. Cl.: H04M 3/18, H04M 19/00

(54) **Fernspeiseschaltung in Kommunikationssystemen**
Remote feeding circuit in communication systems
Dispositif de téléalimentation pour systèmes de communication

(30) Priorität: 13.12.1993 DE 4342480
(43) Veröffentlichungstag der Anmeldung: 14.06.1995
(73) Patentinhaber: SIEMENS AKTIENGESELLSCHAFT, 80333 München (DE)
(72) Erfinder: Silberhorn, Gottfried, Dipl.-Ing., D-80796 München (DE)

(56) Entgegenhaltungen:
- EP-A- 0 185 213
- WO-A-92/19062
- US-A- 4 849 850

## Beschreibung

Die Erfindung betrifft eine Speiseschaltung in Kommunikationssystemen zum Fernspeisen von angeschlossenen Kommunikationsendgeräten, bei der über Wicklungen eines jeweils mit der Anschlußleitung verbundenen Eingangsübertragers eine Gleichspannungsquelle an die oder von der Anschlußleitung mit Hilfe eines elekronischen Schalters schaltbar ist, wobei dessen Schalteingang mit einem Pol der Geichspannungsquelle sowie der Schaltausgang mit einer Wicklung verbunden ist und über dessen Steuereingang die Gleichspannungsquelle schaltbar ist.

Eine Speiseschaltung zum Fernspeisen von Kommunikationsendgeräten ist beispielsweise aus dem Dokument WO 92/19062 bekannt. Die dort angegebene Speiseschaltung weist eine mittels eines MOS-Feldeffekttransistors realisierte Strombegrenzungsschaltung auf, durch die der Speisestrom auf einen einstellbaren Maximalwert begrenzt wird. Im Überlastfall, z.B. bei einem Kurzschluß, wird der in den Speisestromkreis geschaltete MOS-Feldeffekttransistor so angesteuert, daß sich dessen Source-Drain-Widerstand auf einen Wert erhöht, durch den der im Speisestromkreis fließende Strom auf den Maximalwert begrenzt wird. Bei dieser Art des Überlastschutzes fällt allerdings während der gesamten Zeitspanne einer Überlastsituation eine erhebliche Verlustleistung am strombegrenzenden MOS-Feldeffekttransistor ab. Infolgedessen sind zur Realisierung einer solchen Schaltung entsprechend aufwendige, leistungsstarke MOS-Feldeffekttransistoren, gegebenenfalls mit zusätzlichen Kühleinrichtungen, erforderlich.

Eine ebenfalls strombegrenzende Speiseschaltung, bei der die am strombegrenzenden MOS-Feldeffekttransistor abfallende Verlustleistung durch eine geeignete Zusatzbeschaltung verringert wird, ist aus der Patentschrift US 4849850 bekannt. Hierbei wird im Überlastfall der MOS-Feldeffekttransistor von einem an dessen Steuereingang angeschlossenen Kippschwingungsgenerator periodisch vom strombegrenzenden, d.h. verlustleistungsintensiven Zustand in einen verlustleistungsfreien Sperrzustand und zurück geschaltet. Im zeitlichen Mittel verringert sich somit die auftretende Verlustleistung. Der Faktor der Verringerung ergibt sich dabei aus dem Verhältnis der jeweiligen Verweilzeit im strombegrenzenden Zustand und im Sperrzustand, wobei dieses Verhältnis durch eine entsprechende Bemessung des Kippschwingungsgenerators vorgegeben werden kann. Jedoch tritt auch bei dieser Schaltungsanordnung die Verlustleistung während der gesamten Zeitspanne einer Überlastsituation auf.

Eine andere Art des Überlastschutzes besteht darin, die Speisespannung bei Auftreten einer Überlastsituation von der Anschlußleitung des Kommunikationsendgerätes für die Zeitdauer der Überlastsituation wegzuschalten. Eine höhere Verlustleistung tritt dabei in der Regel nur während der sehr kurzen Zeitspannne eines solchen Schaltvorgangs auf.

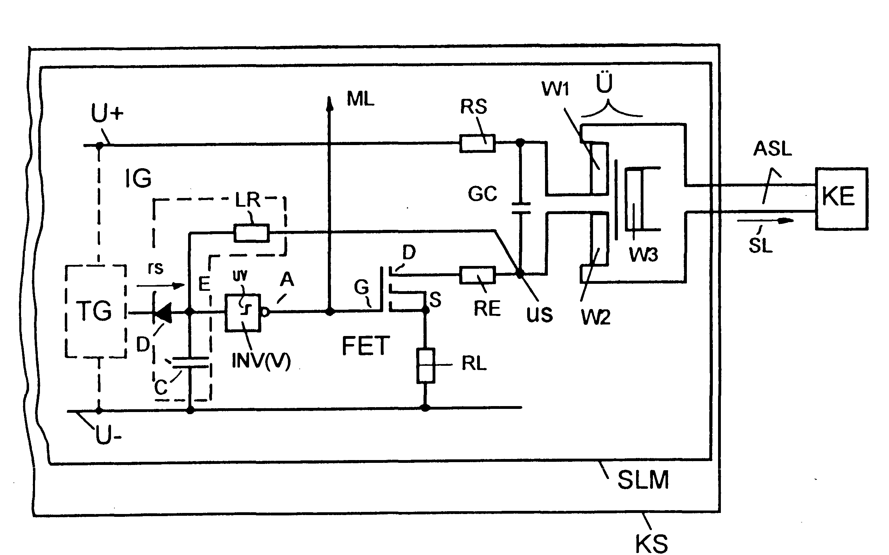

Eine derartige Speiseschaltung ist aus der Druckschrift der Firma Siemens "IC's for Communications", 1989, Seite 244 bis 257 bekannt. Die in Fig. 1 angegebene Speiseschaltung ist mit Hilfe eines integrierten Schaltkreises PEB 2025 "ISDN exchange power controller (IEPC)" realisiert. In diesem integrierten Schaltkreis ist für jede Anschlußleitung ein elektroni scher Schalter vorgesehen, dessen Schalteingang mit einem Pol der Gleichspannungsquelle sowie dessen Schaltausgang mit einer Wicklung des mit der Anschlußleitung verbundenen Eingangsübertragers verbunden ist und über dessen Steuereingang die Gleichspannungsquelle mit Hilfe einer Steuerlogik schaltbar ist. Im Überlastfall, z.B. bei Kurzschlüssen auf der Anschlußleitung, läuft die in Seite 249 beschriebene Überlastprozedur ab. Bei dieser Überlastprozedur treten insbesondere in den ersten 200 ms hohe Verlustleistungen auf, wobei der elektronische Schalter derart zu bemessen ist, daß die hohen Verlustleistungen nicht zu dessen Zerstörung führen. Dies bedeutet, daß die Verlustleistung bei Kurzschluß die Dimensionierung des elektronischen Schalters bestimmen und folglich kostenintensive elektronische Schalter mit Eigenschaften erforderlich sind, die weit über den Eigenschaften im Normalbetrieb liegen.

Der Erfindung liegt die Aufgabe zugrunde, die letzgenannte Speiseschaltung insbesondere hinsichtlich der Überdimensionierung der elektronischen Schalter zu verbessern. Die Aufgabe wird ausgehend von einer Speiseschaltung gemäß den Merkmalen des Oberbegriffs des Patentanspruchs 1 durch dessen kennzeichnende Merkmale gelöst.

Der wesentliche Aspekt der erfindungsgemäßen Speiseschaltung ist darin zu sehen, daß ein aus einem Schleifenstrom eine proportionale Spannung von der Schaltausgangsseite eines elektronischen Schalters ableitendes Mittel auf ein mit einem Komparator verbundenes Integrierglied geführt ist, und daß der Ausgang des Komparators mit dem Steuereingang des elektronischen Schalters verbunden ist und diesen derart steuert, daß bei Überschreiten der am Schaltausgang auftretenden integrierten Spannung über einen vorgegebenen Vergleichsspannungswert die elektrische Gleichspannungsquelle von derAnschlußleitung geschaltet wird. Durch Einfügen eines Integriergliedes und eines Komparators wird in vorteilhafter Weise in Abhängigkeit von der Höhe der Überlastung der Speiseschaltung die Gleichspannungsquelle schneller oder langsamer von der Anschlußleitung geschaltet. Dies bedeutet, daß bei sehr hohen Überlastströmen, z.B. Kurzschluß, mit Hilfe des Integriergliedes eine sehr kurze Verzögerungszeit bis zum Abschalten der Gleichstromquelle erreicht wird. Andererseits ist die Integrationskonstante des Integriergliedes derart zu bemessen, daß bei kurzen, erlaubten Überbelastungen, wie z.B. bei Anschalten eines Kommunikationsendgerätes an die Anschlußleitung, die Gleichstromquelle noch nicht von der Anschlußleitung geschaltet wird. Durch die automatische Einstellung unterschiedlicher Verzögerungszeiten durch das Integrierglied kann somit die Zeit der maximalen Belastung eines elektronischen Schalters erheblich verkürzt werden. Durch die Verkürzung der Zeit der maximalen Überbelastung des elektronischen Schalters sind kostengünstigere elektronischer Schalter eingesetzbar. Dies führt zu erheblichen Einsparungen in Kommunikationssystemen, da elektronische Schalter für jede Anschlußleitung bzw. für jedes Kommunikationsendgerät vorzusehen sind.

Besonders vorteilhaft wird der elektronische Schalter durch einen MOS-Leistungs-Feldeffekttransistor realisiert - Anspruch 2. Alternativ sind bipolare Transistoren einsetzbar.

Gemäß einer vorteilhaften Ausgestaltung der erfindungsgemäßen Speiseschaltung ist der Source-Anschluß des MOS-Leistungs-feldeffekttransistors über einen Begrenzungswiderstand mit dem negativen Pol der Gleichspannungsquelle verbunden und der Drainanschluß über einen Schutzwiderstand auf die Wicklung des Eingangsübertragers geführt - Anspruch 3. Mit Hilfe des Begrenzungswiderstandes wird der maximal zulässige Schleifenstrom bei Kurzschluß eingestellt. An die Wicklung ist zusätzlich ein freier Anschluß eines Ladewiderstandes geführt, der Teil einer Serienschaltung dieses Ladewiderstandes und eines Kondensators ist. Diese Serienschaltung stellt eine besonders vorteilhafte Realisierung des Integrationsgliedes dar - Anspruch 4 -, wobei der freie Anschluß des Kondensators auf den negativen Pol der Gleichspannungsquelle und die zusammengeschalteten Anschlüsse des Ladewiderstandes und des Kondensators auf einen Eingang des Komparators geführt werden. Der Komparator wird vorteilhaft durch ein Invertierglied einer standardisierten, integrierten Schaltkreistechnik realisiert, wobei dessen Ein- und Ausgang den Ein- und Ausgang des Komparators repräsentieren. Besonders vorteilhaft wird ein Invertierglied der geringen Stromverbrauch aufweisenden CMOS-Schaltkreistechnik eingesetzt. Hierbei wird bei Überschreiten einer Eingangsspannung über beispielsweise 5 Volt bei einer Betriebsspannung von 10 Volt der Ausgang des Invertiergliedes in einen invertierenden Zustand gesteuert. Die Schaltschwelle ist hierbei durch den intern vorgegebenen Vergleichsspannungswert von 5 Volt gegeben. Bei einer Realisierung des Integrationsgliedes zusammen mit einem Komparator in einem integrierten Schaltkreis sind an dessen Eingang mehrere Komparatoren zusammengeschaltet und der jeweils andere Eingang der Komparatoren auf jeweils einen Widerstand einer mit einer Referenzspannung verbundenen Widerstandskette geschaltet - Anspruch 6. Die Ausgänge der Komparatoren steuern einen Zähler derart, daß in Abhängigkeit von der Höhe der am Schutzwiderstand auftretenden, zum Schleifenstrom proportionalen Spannung über einen vorgegebenen Wert das Überschreiten der vorgegebenen Spannung unterschiedlich verzögert an den Steuereingang des elektronischen Schalters gesteuert wird, wodurch die Gleichspannungswelle von der Anschlußleitung geschaltet wird. Alternativ kann ein Integrationsglied durch einen Komparator gebildet werden, auf dessen weiteren Eingang verschiedene Vergleichspannungen bzw. Referenzspannung schaltbar sind. Die angegebenen Realisierungen eines Integrationsglieds mit Komparatoren bzw. Zählern sind auf eine Realisierung in integrierten Schaltkreisen abgestimmt, da insbesondere Kondensatoren in integrierten Schaltungen nur mit erheblichem Aufwand realisierbar sind. Bei einer derartigen Realisierung sind die mit Hilfe der Zähler gebildeten unterschiedlichen Verzögerungszeiten auf die Eigenschaften des elektronischen Schalters abzustimmen.

Bei der erfindungsgemäßen Speiseschaltung wird nach einem Abschalten der Gleichspannungsquelle von der Anschlußleitung diese nicht automatisch, z.B. nach einer vorgegebenen Zeit, erneut an die Anschlußleitung geschaltet. Dies stellt eine beabsichtigte Maßnahme dar, damit die Erholungszeit des elektronischen Schalters sicher eingehalten wird. Eine Möglichkeit, die Gleichstromquelle wieder an die Anschlußleitung zu schalten, besteht darin, eine Impulseinrichtung derart an das Integrationsglied zu schalten, daß durch zumindest einen in der Impulseinrichtung gebildeten Rücksetzimpuls das Integrierglied derart beeinflußt wird, daß die Gleichstromquelle wieder an die Anschlußleitung geschaltet wird - Anspruch 7. Hierbei wird ein Impuls erzeugt, der den Kondensator entlädt, wodurch am Ausgang des Komparators ein Potentialwechsel bewirkt wird, der das elektronische Schaltmittel derart beeinflußt, daß die Gleichstromquelle an die Wicklung des Eingangsübertragers geschaltet wird.

Eine weitere Variante der Wiederanschaltung der Gleichstromquelle besteht darin, das Abschalten der Gleichstromquelle beispielsweise über eine Potentialleitung einer übergeordneten Steuerung zu melden, mit deren Hilfe z.B. durch Anlegen eines Rücksetzimpulses an das Integrierglied die Wiederanschaltung der Gleichstromquelle bewirkt wird. Sowohl bei der Impulseinrichtung als auch bei der Lösung durch eine zentrale Steuerung, z.B. einem Mikroprozessor, ist die Periodendauer bzw. die Wiedereinschaltzeit der gebildeten Rücksetzsignale in der Art zu bestimmen, daß die Erholungszeit des elektronischen Schaltmittels eingehalten wird - Anspruch 8.

Gemäß einer weiteren vorteilhaften Ausgestaltung der erfindungsgemäßen Speiseschaltung ist die Größe des Begrenzungswiderstandes und des Schutzwiderstandes, die Integrationsgeschwindigkeit des Integriergliedes sowie die Komparatorvergleichsspannung auf die Eigenschaften hinsichtlich der Belastung des elektronischen Schaltmittels und auf eine erlaubte kurzzeitige Überlastung abzustimmen - Anspruch 9. Die Eigenschaften hinsichtlich der Belastung des elektronischen Schaltmittels sind durch den ausgewählten Typ des MOS-Leistungs-Feldeffekttransistors bestimmt und die vorgegebene erlaubte Überlastungszeit ist durch die Zeit bestimmt, bei der eine Überlastung der Speiseschaltung durch Anschluß eines Kommunikationsendgerätes an die Anschlußleitung entsteht. Die erlaubte Überlastung wird bei Anschluß des Kommunikationsendgerätes insbesondere durch das Aufladen der wirksamen Kondensatoren verursacht.

Im folgenden wird die erfindungsgemäße Speiseschaltung anhand eines Schaltbildes näher erläutert.

Die Fig. zeigt teilweise eine Anschlußbaugruppe SLM eines Kommunikationssystems KS und beispielhaft für mehrere an das Kommunikationssystem KS angeschlossene Kommunikationsendgeräte ist ein Kommunikationsendgerät KE dargestellt, das über eine zweiadrige Anschlußleitung ASL mit dem Kommunikationssystem KS verbunden ist. In der Anschlußbaugruppe SLM ist eine Ader der zweiadrigen Anschlußleitung ASL mit einem Ende einer ersten Wicklung W1 und die zweite Ader mit einem Ende einer zweiten Wicklung W2 eines Eingangsübertragers Ü verbunden. Eine dritte Wicklung W3 des Eingangsübertragers Ü ist Teil nicht dargestellter, erfindungsunwesentlicher Einrichtungen auf der Anschlußbaugruppe SLM . Das andere Ende der ersten Wicklung W1 ist auf einen Symmetrierwiderstand RS und das andere Ende der zweiten Wicklung W2 auf einen Schutzwiderstand RE geführt. Zwischen diese beiden Enden der ersten und zweiten Wicklung W1, W2 ist ein Glättungskondensator GC geschaltet. Der Symmetrierwiderstand RS ist mit dem possitiven Pol + einer Gleichspannungsquelle U verbunden. Das noch freie Ende des Schutzwiderstandes RE ist auf den Drain-Anschluß D eines MOS-Kleinleistungs-Feldeffekttransistors FET geführt. Dessen Source-Anschluß S ist über einen Begrenzungswiderstand RL auf den negativen Pol - der Gleichspannungsquelle U geschaltet. Der Gate-Anschluß G des MOS-Kleinleistungs-Feldeffekttransistors FET ist mit dem Ausgang A eines Inverters INV verbunden. Der Inverter INV stellt den erfindungsgemäßen Komparator V dar, der vorteilhaft durch einen integrierten Schaltkreis der CMOS-Serie, z.B. 4049 realisiert ist. Als MOS-Kleinleistungs-Feldeffekttransistor ist beispielsweise ein BSP 123 der Firma Siemens vorgesehen.

Der Eingang des Inverters INV ist sowohl mit einem Kondensator C als auch mit einem Ladewiderstand LR verbunden. Das andere Ende des Ladewiderstandes LR ist auf das mit dem Schutzwiderstand RE verbundene Ende der zweiten Wicklung W2 und das andere Ende des Kondensators C an den negativen Pol - der Gleichspannungsquelle U geführt. Die Serienschaltung des Ladewiderstandes LR und des Kondensators C bilden das erfindungsgemäße Integrierglied IG - durch gestrichelte Linien dargestellt.

An den Eingang E des Inverters INV wird über eine Entkopplungsdiode D das Rücksetzsignal rs zugeführt. Dieses Rücksetzsignal rs wird entweder in einem hierfür vorgesehen Taktgenerator TG - durch gestrichelte Linien angedeutet - oder in einer weiteren, nicht dargestellten Einrichtung, z.B. einem Mikroprozessor gebildet. Das Rücksetzsignal rs muß eine Impulsdauer aufweisen, bei der der Kondensator C vollständig entladen wird. Des weiteren muß der zeitliche Abstand zwischen zwei Rücksetzimpulsen rs zumindest über der Erholungszeit des MOS-Kleinleistungs-Feldeffekttransistors FET nach einer Überlastung liegen.

Bei angeschlossenem, aktivierten Kommunikationsendgerät KE fließt ein Schleifenstrom SL über den Begrenzungswiderstand RL, den MOS-Kleinleistungs-Feldeffekttransistor FET, den Schutzwiderstand RE, die zweite Wicklung W2, über die Anschlußleitung ASL zum Kommunikationsendgerät KE und zurück zur ersten Wicklung W1 und über den Symmetrierwiderstand RS zum positiven Pol + der Gleichspannungsquelle U. Hierbei stellt sich am mit der zweiten Wicklung W2 verbundenen Ende des Schutzwiderstandes RE und über den Ladewiderstand LR am Kondensator C eine dem aktuellen Schleifenstrom SL proportionale Spannung us ein, die die interne Schwellwertspannung uv des Inverters INV nicht überschreitet. Der Ausgang A des Inverters INV weist hierbei ein Potential auf, bei dem der MOS-Kleinleistungs-Feldeffekttransistor FET in den leitenden Zustand, d.h. durchgeschalteten Zustand gesteuert ist. Steigt beispielsweise der Schleifenstrom SL aufgrund eines Kurzschlusses sehr schnell an, so erhöht sich die Spannung us am Schutzwiderstand RE sofort, wodurch über den Ladewiderstand LR eine schnelle Ladung des Kondensators C bewirkt wird. Nach Überschreiten der im Inverter INV eingestellten Schwellenspannung uv wird der Ausgang A des Inverters INV an ein Potential gelegt, bei dem der MOS-Kleinleistungs-Feldeffekttransistor FET in den Sperrzustand gesteuert wird. Hierdurch wird eine schnelle Abschaltung der Gleichstromquelle U von der Anschlußleitung ASL bzw. dem Kommunikationsendgerät KE erreicht. Durch die schnelle Abschaltung wird der MOS-Kleinleistungs-Feldeffekttransistor FET erheblich weniger belastet als bei einer fest vorgegebenen Abschaltedauer - z.B. 200 ms bei dem eingangs angegebenen integrierten Schaltkreis. Die Schnelligkeit der Abschaltung wird durch die Integrationszeitkonstante des Integriergliedes IG sowie die Schwellenspannung uv und die Dimensionierung des Begrenzungs- und Schutzwiderstandes RL, RE bestimmt. Dies bedeutet, daß diese Schaltungskomponenten derart aufeinander abzustimmen sind, daß der vorgesehene MOS-Kleinleistungs-Feldeffekttransistor FET im Überlastfall thermisch nicht zerstört wird. Andererseits sind diese Schaltungskomponenten derart zu bemessen, daß bei Aktivieren eines Kommmunikationsendgerätes KE, bei dem eine kurzzeitige Schleifenstromerhöhung auftritt, die Gleichspannungsquelle U nicht von der Anschlußleitung ASL geschaltet wird.

Der Sperrzustand des MOS-Kleinleistungs-Feldeffekttransistors FET bleibt solange bestehen, bis an den Eingang E des Inverters INV ein Rücksetzimpuls rs gesteuert wird, wodurch der Kondensator C entladen und an den Ausgang A des Inverters INV ein Potential gesteuert wird, bei dem der MOS-Kleinleistungs-Feldeffekttransistor FET wieder in den leitenden Zustand geschaltet wird. Vom Ausgang A des Inverters INV wird vorteilhaft eine Meldeleitung ML an weitere, nicht dargestellte Einrichtungen, z.B. einen Mikroprozessor, geschaltet, über die die Abschaltung der Gleichspannungsquelle U von der Anschlußleitung ASL an die weiteren Einrichtungen gemeldet werden kann. In den weiteren Einrichtungen, z.B. einem Mikroprozessor, kann daraufhin ein Rücksetzimpuls rs gebildet und an den Eingang E des Inverters INV gesteuert werden.

## Patentansprüche

1. Speiseschaltung in Kommunikationssystemen (KS) zum Fernspeisen von angeschlossenen Kommunikationsendgeräten (KE), bei der über Wicklungen (W1,W2) eines jeweils mit der Anschlußleitung (ASL) verbundenen Eingangsübertragers (Ü) eine Gleichspannungsquelle (U) an die oder von der Anschlußleitung (ASL) mit Hilfe eines elekronischen Schalters (FET) schaltbar ist, wobei dessen Schalteingang (S) mit einem Pol (-) der Geichspannungsquelle (U) sowie der Schaltausgang (D) mit einer Wicklung (W2) verbunden ist und über dessen Steuereingang (G), mit dem der Ausgang eines mit einem Integrierglied (IG) verbundenen Komparators (V) verbunden ist, die Gleichspannungsquelle (U) schaltbar ist,
**dadurch gekennzeichnet,**
daß ein aus einem Schleifenstrom (SL) eine proportionale Spannung (us) von der Schaltausgangsseite des elektronischen Schalters (FET) ableitendes Mittel (RL,RE) an das mit dem Komparator (V) verbundene Integrierglied (IG) geführt ist, und der Steuereingang (G) des elektronischen Schalters (FET) über den Ausgang (A) des Komparators (V) derart gesteuert wird, daß bei Überschreiten der integrierten Spannung (us) über einen vorgegebenen Spannungswert (uv) die elektrische Gleichspannungsquelle (U) von der Anschlußleitung (ASL) geschaltet wird und die Speiseschaltung in einen stabilen abschaltenden Zustand übergeht, wobei die Integrationszeitkonstante des Integriergliedes (IG) derart bestimmt ist, daß die Gleichspannungsquelle (U) vor der thermischen Zerstörung des elektronischen Schalters (FET) von der Anschlußleitung (ASL) geschaltet wird.

2. Speiseschaltung nach Anspruch 1,
**dadurch gekennzeichnet,**
daß der elekronische Schalter (FET) durch einen MOS-Leistungs-Feldeffekttransistor (FET) realisiert ist, wobei
- der Steuereingang (G) durch den Gate- Anschluß (G),
- der Schaltausgang (D) durch den Drain- Anschluß (D) und
- der Schalteingang (S) durch den Source- Anschluß (S) des MOS-Leistungs-Feldeffekttransistors (FET) bestimmt ist.

3. Speiseschaltung nach Anspruch 1 und 2,
**dadurch gekennzeichnet,**
daß der Source- Anschluß (S) des MOS-Leistungs-Feldeffekttransistors (FET) über einen Begrenzungswiderstand (RL) mit dem negativen Pol (-) der Gleichspannungsquelle (U) verbunden ist, und daß der Drain- Anschluß (D) über einen Schutzwiderstand (RE) mit einer Wicklung (W2) des Eingangsübertragers (Ü) verbunden ist.

4. Speiseschaltung nach einem der Ansprüche 1 bis 3,
**dadurch gekennzeichnet,**
daß das Integrationsglied (IG) durch eine Serienschaltung eines Ladewiderstandes (LR) und eines Kondensators (C) gebildet ist, wobei
- der freie Anschluß des Ladewiderstandes (LR) auf die mit dem Schutzwiderstand (RE) verbundene Wicklung (W2),
- der freie Anschluß des Kondensators (C) auf den negativen Pol (-) der Gleichspannungsquelle (U) und
- die zusammengeschalteten Anschlüsse des Ladewiderstandes (LR) und des Kondensators (C) auf einen Eingang des Komparators (V)
geführt ist.

5. Speiseschaltung nach einem der Ansprüche 1 bis 4,
**dadurch gekennzeichnet,**
daß der Komparator (V) durch ein Invertierglied (INV) einer standardisierten, integrierten Schaltkreistechnik (CMOS) realisiert ist, wobei dessen Ein- und Ausgang (E,A) den Ein- und Ausgang (A) des Komparator (V) repräsentieren.

6. Speiseschaltung nach einem der Ansprüche 1 bis 4,
**dadurch gekennzeichnet,**
daß das Integrierglied (IG) zusammen mit dem Komparator (V) in einem integrierten Schaltkreis derart realisiert ist, daß jeweils ein Eingang mehrerer Komparatoren zusammengeschaltet ist und der jeweils andere Eingang der Komparatoren auf jeweils einen Widerstand einer mit einer Referenzspannung verbundenen Widerstandskette geschaltet ist, sowie die Ausgänge der Komparatoren mit einem Zähler verbunden sind, mit dessen Hilfe ein das Überschreiten der vorgegebenen Spannung anzeigendes Steuersignal in Abhängigkeit von den Ausgangssignalen der Komparatoren verzögert wird und dem Steuereingang (G) des elektronischen Schalters (FET) zugeleitet wird, wodurch die Gleichspannungsquelle (U) von der Anschlußleitung (ASL) geschaltet wird.

7. Speiseschaltung nach einem der vorhergehenden Ansprüche,
**dadurch gekennzeichnet,**
daß eine Impulseinrichtung (TG) derart an das Integrierglied (IG) geschaltet ist, daß durch zumindest ein in der Impulseinrichtung (TG) gebildetes Rücksetzsignal (rs) das Integrierglied (IG) derart beeinflußt wird, daß die Gleichstromquelle (U) wieder an die Anschlußleitung (ASL) geschaltet wird.

8. Speiseschaltung nach Anspruch 7,
**dadurch gekennzeichnet,**
daß die Impulseinrichtung (TG) durch einen Taktgenerator (TG) derart realisiert ist, daß die Periodendauer der gebildeten Rücksetzsignale (rs) über der Erholungszeit des elektronichen Schaltmittels (FET) liegt.

9. Speiseschaltung nach einem der vorhergehenden Ansprüche,
**dadurch gekennzeichnet,**
daß die Größe des Begrenzungswiderstandes (RL) und des Schutzwiderstandes (RE) sowie die Komparatorvergleichsspannung (uv) auf die Eigenschaften hinsichtlich Belastung des elektronischen Schaltmittels (FET) abgestimmt sind.

## Claims

1. Feeding circuit in communication systems (KS) for remote feeding of connected communication terminals (KE), in which, via windings (W1, W2) of an input transformer (Ü) respectively connected to the subscriber line (ASL), a DC voltage source (U) can be connected to or disconnected from the subscriber line (ASL) with the aid of an electronic switch (FET), the switching input (S) of the said switch being connected to one pole (-) of the DC voltage source (U) and the switching output (D) being connected to a winding (W2), and it being possible for the DC voltage source (U) to be connected via the control input (G) of the said switch, the output of a comparator (V) connected to an integrating element (IG) being connected to the said control input,
characterized
in that a means (RL, RE) which derives from a loop current (SL) a proportional voltage (us) from the switching output side of the electronic switch (FET) is connected to the integrating element (IG) connected to the comparator (V), and the control input (G) of the electronic switch (FET) is controlled via the output (A) of the comparator (V) in such a way that when the integrated voltage (us) exceeds a predetermined voltage value (uv), the electrical DC voltage source (U) is disconnected from the subscriber line (ASL) and the feeding circuit changes to a stable switching-off state, the integration time constant of the integrating element (IG) being determined in such a way that the DC voltage source (U) is disconnected from the subscriber line (ASL) before the thermal destruction of the electronic switch (FET).

2. Feeding circuit according to Claim 1,
characterized
in that the electronic switch (FET) is realized by a MOS power field-effect transistor (FET),
- the control input (G) being determined by the gate connection (G),
- the switching output (D) being determined by the drain connection (D) and
- the switching input (S) being determined by the source connection (S) of the MOS power field-effect transistor (FET).

3. Feeding circuit according to Claims 1 and 2,
characterized
in that the source connection (S) of the MOS power field-effect transistor (FET) is connected to the negative pole (-) of the DC voltage source (U) via a limiting resistor (RL), and in that the drain connection (D) is connected to a winding (W2) of the input transformer (0) via a protective resistor (RE).

4. Feeding circuit according to one of Claims 1 to 3,
characterized
in that the integrating element (IG) is formed by a series circuit comprising a charging resistor (LR) and a capacitor (C),
- the free connection of the charging resistor (LR) being connected to the winding (W2) connected to the protective resistor (RE),
- the free connection of the capacitor (C) being connected to the negative pole (-) of the DC voltage source (U) and
- the interconnected connections of the charging resistor (LR) and of the capacitor (C) being connected to an input of the comparator (V).

5. Feeding circuit according to one of Claims 1 to 4,
characterized
in that the comparator (V) is realized by an inverting element (INV) of a standardized integrated circuit technology (CMOS), the input and output (E, A) thereof representing the input and output (A) of the comparator (V).

6. Feeding circuit according to one of Claims 1 to 4,
characterized
in that the integrating element (IG) is realized together with the comparator (V) in an integrated circuit in such a way that one respective input of a plurality of comparators are interconnected and the respective other input of the comparators is connected to a respective resistor of a chain of resistors connected to a reference voltage, and the outputs of the comparators are connected to a counter with the aid of which a control signal indicating that the predetermined voltage has been exceeded is delayed in a manner dependent on the output signals of the comparators and is fed to the control input (G) of the electronic switch (FET), as a result of which the DC voltage source (U) is disconnected from the subscriber line (ASL).

7. Feeding circuit according to one of the preceding claims,
characterized
in that a pulse device (TG) is connected to the integrating element (IG) in such a way that at least one reset signal (rs) formed in the pulse device (TG) influences the integrating element (IG) in such a way that the DC source (U) is reconnected to the subscriber line (ASL).

8. Feeding circuit according to Claim 7,
characterized
in that the pulse device (TG) is realized by a clock generator (TG) in such a way that the period of the reset signals (rs) formed is longer than the recovery time of the electronic switching means (FET).

9. Feeding circuit according to one of the preceding claims,
characterized
in that the size of the limiting resistor (RL) and of the protective resistor (RE) and the comparator comparison voltage (uv) are matched to the properties in respect of loading of the electronic switching means (FET).

## Revendications

1. Circuit d'alimentation dans des systèmes de communication (KS) pour la téléalimentation de terminaux de communication (KE) raccordés, dans lequel une source de tension continue (U) peut être branchée sur ou coupée de la ligne de raccordement (ASL) à l'aide d'un interrupteur électronique (FET) par l'intermédiaire d'enroulements (W1, W2) d'un transformateur d'entrée (Ü) relié à chaque fois à la ligne de raccordement (ASL), l'entrée de commutation (S) de l'interrupteur étant reliée à un pôle (-) de la source de tension continue (U), sa sortie de commutation (D) étant reliée à un enroulement (W2) et la source de tension continue (U) pouvant être commutée par l'intermédiaire de son entrée de commande (G) à laquelle est reliée la sortie d'un comparateur (V) relié à un élément intégrateur (IG),
caractérisé par le fait qu'un moyen (RL, RE) déduisant d'un courant de boucle (SL) une tension proportionnelle (us) du côté de la sortie de commutation de l'interrupteur électronique (FET) est branché sur l'élément intégrateur (IG) relié au comparateur (V) et que l'entrée de commande (G) de l'interrupteur électronique (FET) est commandée par l'intermédiaire de la sortie (A) du comparateur (V) de telle sorte que, lors d'un dépassement de la tension intégrée (us) au-delà d'une valeur de tension prescrite (uv), la source de tension continue (U) électrique est coupée de la ligne de raccordement (ASL) et le circuit d'alimentation passe dans un état coupé stable, la constante de temps d'intégration de l'élément intégrateur (IG) étant déterminée de telle sorte que la source de tension continue (U) est coupée de la ligne de raccordement (ASL) avant la destruction thermique de l'interrupteur électronique (FET).

2. Circuit d'alimentation selon la revendication 1, caractérisé par le fait que l'interrupteur électronique (FET) est mis en oeuvre par un transistor de puissance à effet de champ MOS (FET),
- l'entrée de commande (G) étant déterminée par la borne de grille (G) du transistor de puissance à effet de champ MOS (FET),
- la sortie de commutation (D) par la borne de drain (D), et
- l'entrée de commutation (S) par la borne de source (S).

3. Circuit d'alimentation selon les revendications 1 et 2,
caractérisé par le fait que la borne de source (S) du transistor de puissance à effet de champ MOS (FET) est reliée par l'intermédiaire d'une résistance de limitation (RL) au pôle négatif (-) de la source de tension continue (U) et que la borne de drain (D) est reliée par l'intermédiaire d'une résistance de protection (RE) à un enroulement (W2) du transformateur d'entrée (Ü).

4. Circuit d'alimentation selon l'une des revendications 1 à 3,
caractérisé par le fait que l'élément intégrateur (IG) est formé par un circuit série composé d'une résistance de charge (LR) et d'un condensateur (C),
- la borne libre de la résistance de charge (LR) étant branchée sur l'enroulement (W2) relié à la résistance de protection (RE),
- la borne libre du condensateur (C) étant branchée sur le pôle négatif (-) de la source de tension continue (U), et
- les bornes, branchées en commun, de la résistance de charge (LR) et du condensateur (C) étant branchées sur une entrée du comparateur (V).

5. Circuit d'alimentation selon l'une des revendications 1 à 4,
caractérisé par le fait que le comparateur (V) est mis en oeuvre par un élément inverseur (INV) d'une technique de circuit intégré standard (CMOS), son entrée et sa sortie (E, A) représentant l'entrée et la sortie (A) du comparateur (V).

6. Circuit d'alimentation selon l'une des revendications 1 à 4,
caractérisé par le fait que l'élément intégrateur (IG) est mis en oeuvre conjointement au comparateur (V)
dans un circuit intégré de telle sorte qu'à chaque fois une entrée de plusieurs comparateurs est branchée en commun et l'autre entrée respective des comparateurs est branchée à chaque fois sur une résistance d'une chaîne de résistances reliée à une tension de référence et que les sorties des comparateurs sont reliées à un compteur à l'aide duquel un signal de commande indiquant le dépassement de la tension prescrite est retardé en fonction des signaux de sortie des comparateurs et est envoyé à l'entrée de commande (G) de l'interrupteur électronique (FET), la source de tension continue (U) étant alors coupée de la ligne de raccordement (ASL).

7. Circuit d'alimentation selon l'une des revendications précédentes,
caractérisé par le fait qu'un dispositif à impulsions (TG) est branché sur l'élément intégrateur (IG) de telle sorte que l'élément intégrateur (IG) est influencé par au moins un signal de remise à l'état initial (rs) formé dans le dispositif à impulsions (TG) de telle sorte que la source de tension continue (U) est rebranchée sur la ligne de raccordement (ASL).

8. Circuit d'alimentation selon la revendication 7, caractérisé par le fait que le dispositif à impulsions (TG) est mis en oeuvre par un générateur d'horloge (TG) de telle sorte que la durée de période des signaux de remise à l'état initial (rs) formés est supérieure au temps de régénération de l'interrupteur électronique (FET).

9. Circuit d'alimentation selon l'une des revendications précédentes,
caractérisé par le fait que la grandeur de la résistance de limitation (RL) et celle de la résistance de protection (RE) ainsi que la tension de comparaison de comparateur (uv) sont adaptées aux propriétés concernant la charge de l'interrupteur électronique (FET).
